# EUROPÄISCHE PATENTSCHRIFT

(11) **EP 0 462 649 B1**
(45) Veröffentlichungstag und Bekanntmachung des Hinweises auf die Patenterteilung: **10.01.1996**
(21) Anmeldenummer: 91201445.3
(22) Anmeldetag: 12.06.1991
(51) Int. Cl.: H04M 19/02

(54) **Schaltungsanordnung zur Umschaltung eines Teilnehmergerätes an einen Rufwechselspannungsgenerator oder eine Teilnehmerspeiseschaltung**
Circuit for switching a telephone device between a voltage ringing generator and a power supply circuit
Circuit pour la commutation d'un poste téléphonique entre un générateur de tension de sonnerie et un circuit d'alimentation

(30) Priorität: 18.06.1990 DE 4019365
(43) Veröffentlichungstag der Anmeldung: 27.12.1991
(73) Patentinhaber: Philips Patentverwaltung GmbH, D-22335 Hamburg (DE); Philips Electronics N.V., NL-5621 BA Eindhoven (NL)
(72) Erfinder: Reichelt, Ingo, Dipl.-Ing., W-8540 Schwabach (DE)
(74) Vertreter: Volmer, Georg, Dipl.-Ing.

(56) Entgegenhaltungen:
- FR-A- 2 329 126
- US-A- 3 882 282
- US-A- 3 941 939
- PATENT ABSTRACTS OF JAPAN vol. 7, no. 208 (E-198)(1353) 14.September 1983 & JP-A-58 104 556 (NIPPON DENKI K.K.)

## Beschreibung

Die Erfindung bezieht sich auf ein Telekommunikationssystem mit einer Schaltungsanordnung für wenigstens ein Teilnehmergerät, welche über einen Umschalter an einen Rufwechselspannungsgenerator oder eine Teilnehmerspeiseschaltung anschließbar ist.

Ein solches Telekommunikationssystem ist z.B. Teil einer teilnehmernahen Verteilanordnung und Teil eines Fernsprechnetzes, das nach dem PCM-2-Prinzip arbeitet. Aus der Veröffentlichung "Telecommunications Protection Circuits, Protection Design Guide" von Texas Instruments, 1986, DL 32-11/86, S/C Rev. 6 sind verschiedene Schaltungsanordnungen bekannt, bei denen über einen Umschalter ein Wechselspannungsgenerator oder eine Teilnehmerspeiseschaltung an ein Teilnehmergerät anschließbar ist. In der Zeit in der über den Umschalter der Wechselspannungsgenerator mit dem Teilnehmergerät verbunden ist, wird auch von einem Gleichspannungsgenerator (Batterie) eine der Wechselspannung überlagerte Gleichspannung dem Teilnehmergerät geliefert. Bei einem Ruf verbindet der Umschalter die Teilnehmerspeiseschaltung mit dem Teilnehmergerät, um z.B. eine Rufgleichspannung zu liefern.

In der Regel sind mehrere Teilnehmergeräte über einen automatischen Wechselschalter (AWADO) an den Umschalter angeschlossen. Ein solcher automatischer Wechselschalter benötigt eine Gleichspannung, um einwandfrei zu funktionieren. Daher wird der Wechselspannung eine Gleichspannung überlagert. Um den schaltungstechnischen Aufwand gering zu halten, wird gewünscht, spulenlose Rufwechselspannungsgeneratoren ohne Gleichspannungsgeneratoren einzusetzen. Dabei ist aber ein einwandfreies Funktionieren eines automatischen Wechselschalters nicht möglich.

Der Erfindung liegt daher die Aufgabe zugrunde, ein Telekommunikationssystem mit einer Schaltungsanordnung für ein Teilnehmergerät zu schaffen, bei dem eine Gleichspannung ohne Einsatz eines Wechselspannungsgenerators erzeugt wird.

Eine erste Lösung dieser Aufgabe für ein Telekommunikationssystem mit einer Schaltungsanordnung der eingangs genannten Art ist dadurch gekennzeichnet, daß zwischen Teilnehmergerät und Umschalter ein erster Kondensator angeordnet ist, daß parallel zum ersten Kondensator und dem Umschalter ein Zweig mit einer ersten Gleichrichteranordnung zum Durchlassen einer Halbwelle des vom Rufwechselspannungsgenerator lieferbaren Wechsel stromes enthalten ist, daß parallel zum ersten Kondensator eine zweite Gleichrichteranordnung angeordnet ist zum Durchlassen eines von der Teilnehmerspeiseschaltung lieferbaren Gleichstroms und daß eine erste Auswerteschaltung zum Steuern des Umschalters durch Auswertung des Stromes am ersten Kondensator oder an der ersten Gleichrichteranordnung oder der Spannung am ersten Kondensator vorgesehen ist.

Während der Rufwechselspannungsgenerator über den Umschalter und einem automatischen Wechselschalter mit dem Teilnehmergerät gekoppelt ist, ist der Hörer des Teilnehmergerätes aufgelegt und das Teilnehmergerät gleichstromundurchlässig. Im abgehobenen Zustand des Hörers ist der Umschalter mit der Teilnehmerspeiseschaltung verbunden und das Teilnehmergerät ist gleichstromdurchlässig.

Bei der erfindungsgemäßen Schaltungsanordnung nach der ersten Lösung dient die erste Gleichrichterdiode zur Gleichrichtung der Wechselspannung. Die erste Gleichrichteranordnung läßt nämlich nur eine Halbwelle der vom Wechselspannungsgenerator gelieferten Wechselspannung während des leitenden Zustandes durch. Hierdurch lädt sich der erste Kondensator auf einen Wert auf, der dem Betrag des Spitzenwertes der Wechselspannung des Rufwechselspannungsgenerators entspricht. Die Spannung, auf die der erste Kondensator aufgeladen ist, überlagert sich der Wechselspannung. Durch diesen Gleichspannungsanteil wird eine Funktionsstörung beim automatischen Wechselschalter vermieden.

Damit auch nach der Umschaltung die von der Teilnehmerspeiseschaltung gelieferte Rufgleichspannung zum Teilnehmergerät gelangen kann, ist die zweite Gleichrichteranordnung vorgesehen, welche den von der Teilnehmerspeiseschaltung gelieferten Gleichstrom durchläßt. Mittels der zweiten Gleichrichteranordnung wird also eine Überbrückung des ersten Kondensators bewirkt.

Bei dieser Schaltungsanordnung ist außerdem die niederfrequente Einfügungsdämpfung nachlässigbar gering, und sie weist auch geringe Gleichstromverluste auf.

Eine zweite Lösung der obengenannten Aufgabe für ein Telekommunikationssystem mit einer Schaltungsanordnung der eingangs genannten Art ist dadurch gekennzeichnet, daß zwischen Teilnehmergerät und einem Anschluß des Umschalters ein erster Kondensator angeordnet ist, daß zwei in Reihe geschaltete Gleichrichteranordnungen parallel zum ersten Kondensator gelegt sind, daß zwischen dem anderen Anschluß des Umschalters und der Verbindung zwischen den beiden Gleichrichteranordnungen ein zweiter Kondensator angeordnet ist, daß eine Gleichrichteranordnung angeordnet ist zum Durchlassen einer Halbwelle des von dem Rufwechselspannungsgenerator lieferbaren Wechselstromes, daß die andere Gleichrichteranordnung angeordnet ist zum Durchlassen der anderen Halbwelle, daß beide Gleichrichteranordnungen angeordnet sind zum Durchlassen des von der Teilnehmerspeiseschaltung lieferbaren Gleichstromes und daß eine erste Auswerteschaltung zum Steuern des Umschalters durch Auswertung des Stromes oder der Spannung am ersten Kondensator oder eine zweite Auswerteschaltung zum Steuern des Umschalters durch Auswertung der Spannung am zweiten Kondensator vorgesehen ist.

Bei der zweiten Lösung der erfindungsgemäßen Schaltungsanordnung ist während einer ersten Halbwelle der vom Wechselspannungsgenerator gelieferten Wechselspannung eine erste Gleichrichteranordnung durchlässig, so daß der zweite Kondensator auf einen Wert aufgeladen wird, der dem Betrag des Spitzenwertes der Wechselspannung des Rufwechselspannungsgenerators entspricht. Während der zweiten Halbwelle wird der erste Kondensator auf den doppelten Betrag des Spitzenwertes der Wechselspannung des Rufwechselspannungsgenerators aufgeladen, da die zweite Gleichrichteranordnung leitend ist. Die Polarität des Wertes auf den sich der erste und zweite Kondensator jeweils auflädt, hängt von der Durchlaßrichtung der beiden Gleichrichteranordnungen ab. Die Spannung, auf die der erste Kondensator aufgeladen ist, überlagert sich der Wechselspannung.

Damit auch nach der Umschaltung die von der Teilnehmerspeiseschaltung gelieferte Rufgleichspannung zum Teilnehmergerät gelangen kann, überbrücken die beiden Gleichrichteranordnungen den ersten Kondensator.

Auch bei dieser Schaltungsanordnung ist die niederfrequente Einfügungsdämpfung vernachlässigbar gering, und sie weist auch geringe Gleichstromverluste auf.

Wird vom Teilnehmer der Hörer abgenommen, so verändert sich der Ladungszustand des ersten Kondensators. Die hieraus resultierende Spannungsänderung oder Stromänderung kann zur Steuerung des Umschalters genutzt werden. Daher ist bei beiden Lösungen eine erste Auswerteschaltung und bei der zweiten Lösung alternativ noch eine zweite Auswerteschaltung vorgesehen.

Für die erste Lösung ist zur Erzeugung einer negativen Gleichspannung, die gleich dem negativen Spitzenwert der Wechselspannung des Rufwechselgenerators ist, vorgesehen, daß die erste Gleichrichteranordnung eine erste und die zweite Gleichrichteranordnung eine zweite Diode enthalten, daß die Kathode der zweiten Diode und ein Anschluß des ersten Kondensators mit einem Anschluß des Umschalters gekoppelt sind und daß der andere Anschluß des Kondensators und die Anoden der beiden Dioden gekoppelt sind.

Bei Anliegen einer negativen Halbwelle der Wechselspannung an der Kathode der ersten Diode ist diese in Durchlaßrichtung geschaltet. Der erste Kondensator wird auf den negativen Spitzenwert der Wechselspannung aufgeladen. Liegt die positive Halbwelle der Wechselspannung an, ist die erste Diode gesperrt. Während der Zeit in der das Teilnehmergerät und die Teilnehmerspeiseschaltung über den Umschalter gekoppelt sind, ist die Kathode der zweiten Diode an den negativen Anschluß der Teilnehmerspeiseschaltung angeschlossen. Die zweite Diode ist also leitend und überbrückt den ersten Kondensator.

Für die erste Lösung ist zur Erzeugung einer positiven Gleichspannung, die gleich dem positiven Spitzenwert der Wechselspannung des Rufwechselspannungsgenerators ist, vorgesehen, daß die erste Gleichrichteranordnung eine erste und die zweite Gleichrichteranordnung eine zweite Diode enthalten, daß die Anode der zweiten Diode und ein Anschluß des ersten Kondensators mit einem Anschluß des Umschalters gekoppelt sind und daß der andere Anschluß des Kondensators und die Kathoden der beiden Dioden gekoppelt sind.

Bei Anliegen einer positiven Halbwelle der Wechselspannung an der Anode der ersten Diode ist diese in Durchlaßrichtung geschaltet. Der erste Kondensator lädt sich auf den positiven Spitzenwert der Wechselspannung auf. Wenn die negative Halbwelle der Wechselspannung anliegt, ist die erste Diode gesperrt. Ist das Teilnehmergerät und die Teilnehmerspeiseschaltung gekoppelt, wird der erste Kondensator durch die zweite Diode überbrückt.

Für die zweite Lösung ist zur Erzeugung einer negativen Gleichspannung, die gleich dem zweifachen Spitzenwert der Wechselspannung des Rufwechselspannungsgenerators ist, vorgesehen, daß die Gleichrichteranordnung eine erste und die andere Gleichrichteranordnung eine zweite Diode enthalten, daß die Kathode der zweiten Diode und ein Anschluß des ersten Kondensators mit einem Anschluß des Umschalters gekoppelt sind, daß die Anode der ersten Diode mit dem anderen Anschluß des ersten Kondensators gekoppelt ist und daß die Kathode der ersten Diode und die Anode der zweiten Diode mit einem zweiten Kondensator gekoppelt sind, dessen anderer Anschluß an einen Anschluß des Teilnehmergerätes und den anderen Anschluß des Umschalters gekoppelt ist.

Während des Auftretens der negativen Halbwelle der Wechselspannung ist die zweite Diode leitend, und der zweite Kondensator wird auf den negativen Spitzenwert der Wechselspannung des Rufwechselspannungsgenerators aufgeladen. Bei Auftreten der positiven Halbwelle ist die erste Diode leitend, und der erste Kondensator wird auf den zweifachen negativen Spitzenwert aufgeladen. Während das Teilnehmergerät und die Teilnehmerspeiseschaltung über den Umschalter gekoppelt sind, ist die Kathode der zweiten Diode an den negativen Anschluß der Teilnehmerspeiseschaltung angeschlossen. Die erste und zweite Diode sind leitend und überbrücken den ersten Kondensator. Bei diesem Ausführungsbeispiel haben die beiden Dioden eine Doppelfunktion. Einerseits dienen sie zur Gleichrichtung und andererseits zur Überbrückung des ersten Kondensators.

Für die zweite Lösung ist zur Erzeugung einer positiven Gleichspannung, die gleich dem zweifachen positiven Spitzenwert der Wechselspannung des Rufwechselspannungsgenerators ist, vorgesehen, daß die eine Gleichrichteranordnung eine erste und die andere Gleichrichteranordnung eine zweite Diode enthalten, daß die Anode der zweiten Diode und ein Anschluß des ersten Kondensators mit einem Anschluß des Umschalters gekoppelt sind, daß die Kathode der ersten Diode mit dem anderen Anschluß des ersten Kondensators gekoppelt ist und daß die Anode der ersten Diode und die Kathode der zweiten Diode mit einem zweiten Kondensator gekoppelt sind, dessen anderer Anschluß mit einem Anschluß des Teilnehmergerätes und dem anderen Anschluß des Umschalters gekoppelt. Bei Auftreten einer positiven Halbwelle der Wechselspannung ist die zweite Diode leitend, und der zweite Kondensator wird auf den positiven Spitzenwert der Wechselspannung aufgeladen. Während des Auftretens der negativen Halbwelle der Wechselspannung ist die erste Diode leitend, und der erste Kondensator wird auf den zweifachen positiven Spitzenwert der Wechselspannung aufgeladen. Während der Zeit, in der das Teilnehmergerät und die Teilnehmerspeiseschaltung gekoppelt sind, wird der erste Kondensator durch die Reihenschaltung aus erster und zweiter Diode, die leitend sind, überbrückt. Auch hierbei haben die beiden Dioden die Doppelfunktion der Gleichrichtung und der Überbrückung des ersten Kondensators zu erfüllen.

In einer Weiterbildung der Erfindung ist vorgesehen, daß die erste oder zweite Auswerteschaltung einen Komparator enthält, der einerseits zum Empfangen der Spannung am ersten oder zweiten Kondensator und andererseits zum Empfangen einer Referenzspannung und andererseits zum Steuern des Umschalters mittels seines Ausgangssignales vorgesehen ist.

In einer anderen Weiterbildung ist vorgesehen, daß die erste Auswerteschaltung einen Optokoppler enthält, mit einer Leuchtdiode zum Empfangen des Stroms durch den ersten Kondensator oder des Stroms durch die erste Gleichrichteranordnung und mit einem Fototransistor zum Steuern des Umschalters. Bei dieser Weiterbildung der ersten Auswerteschaltung wird eine Stromänderung durch den ersten Kondensator oder durch die erste Gleichrichteranordnung ausgewertet und zur Steuerung des Umschalters verwendet.

Ausführungsbeispiele der Erfindung werden nachstehend anhand der Zeichung näher erläutert.

Es zeigen:
Fig. 1 bis 4 Telekommunikationssysteme mit Schaltungsanordnungen für ein Teilnehmergerät, und
Fig. 5 und 6 Ausführungsbeispiele für in den Fig. 1 bis 4 verwendeten Auswerteschaltungen.

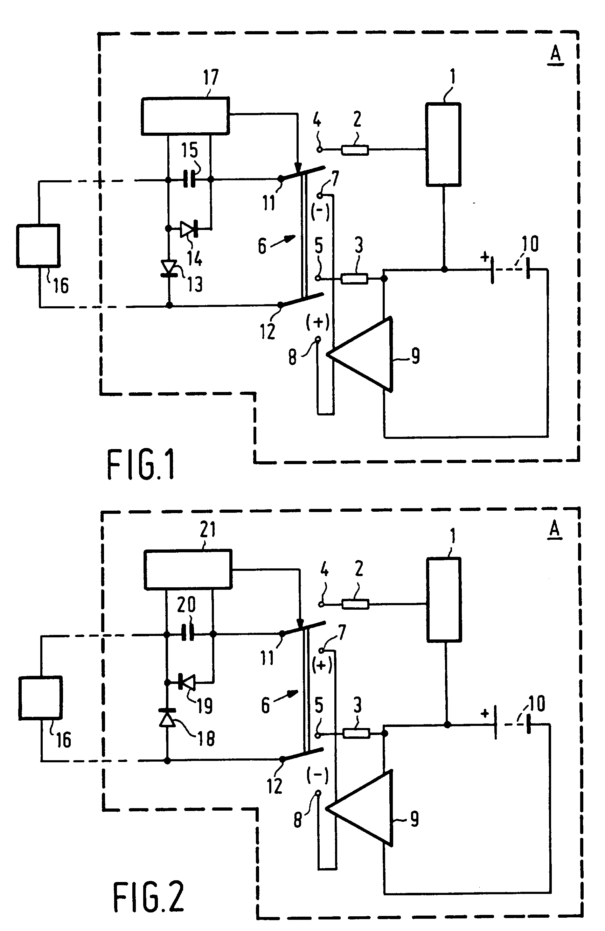

Das in Fig. 1 dargestellte Telekommunikationssystem, das z.B. Teil einer teilnehmernahen Verteilanordnung A und außerdem z.B. Teil eines Fernsprechnetzes ist, das nach dem PCM-2-Prinzip arbeitet, enthält eine Schaltungsanordnung mit einem Rufwechselspannungsgenerator 1, der über zwei Widerstände 2 und 3 mit zwei Anschlüssen 4 und 5 eines Umschalters 6 verbunden ist. Der Umschalter 6 weist noch zwei Anschlüsse 7 und 8 auf, an die eine Teilnehmerspeiseschaltung 9 angeschlossen ist, welche von einer Batterie 10 versorgt wird. An zwei weitere Anschlüsse 11 und 12 des Umschalters 6, sind noch weitere Schaltungselemente angeschlossen. Einerseits kann der Umschalter eine Verbindung zwischen den Anschlüssen 11 und 4 bzw. den Anschlüssen 12 und 5 und andererseits zwischen den Anschlüssen 11 und 7 bzw. den Anschlüssen 12 und 8 herstellen.

An den Anschluß 12 des Umschalters 6 ist die Kathode einer ersten Diode 13 angeschlossen, deren Anode mit der Anode einer zweiten Diode 14 und einem Anschluß eines ersten Kondensators 15 verbunden ist. Der Anschluß 11 des Umschalters 6, der andere Anschluß des ersten Kondensators 15 und die Kathode der zweiten Diode 14 bilden einen gemeinsamen Knoten. Zwischen die Anode der zweiten Diode 14 und die Kathode der ersten Diode 13 ist ein Teilnehmergerät 16 angeschlossen. An den beiden Anschlüssen des ersten Kondensators 15 ist noch eine erste Auswerteschaltung 17 angeschaltet, die den Umschalter 6 steuert.

Bei einem Ruf wird von dem Rufwechselspannungsgenerator 1 über den Umschalter 6 dem Teilnehmergerät 16 eine Wechselspannung zur Betätigung der im Teilnehmergerät 16 befindlichen Rufvorrichtung geliefert. Das Teilnehmergerät 16 ist bei einem Ruf für Gleichstrom undurchlässig (Hörer des Teilnehmergerätes 16 aufgelegt). Wenn eine negative Halbwelle der Wechselspannung des Rufwechselgenerators 1 an der Kathode der ersten Diode 13 anliegt, ist die Diode 13 in Durchlaßrichtung geschaltet. Der erste Kondensator 15 wird auf den negativen Spitzenwert der Wechselspannung aufgeladen. Liegt die positive Halbwelle der Wechselspannung des Rufwechselspannungsgenerators 1 an der Kathode der ersten Diode 13, ist die Diode 13 gesperrt. Der Gleichspannungsanteil im ersten Kondensator wird der Wechselspannung überlagert.

Wird von dem Teilnehmer der Hörer abgenommen, so wird das Teilnehmergerät 16 gleichstromdurchlässig. Hierdurch ergibt sich eine Ladungsänderung im ersten Kondensator 15. Diese Ladungsänderung detektiert die Auswerteschaltung 17, die daraufhin den Umschalter 6 so umschaltet, daß die Anschlüsse 11 und 7 und die Anschlüsse 12 und 8 verbunden sind.

Die Teilnehmerspeiseschaltung 9 liefert eine Betriebsgleichspannung über dem Umschalter 6 dem Teilnehmergerät 16. Der negative Anschluß der Teilnehmerspeiseschaltung 9 liegt am Anschluß 7 und der positive Anschluß am Anschluß 8. Damit der Gleichstrom auch zum Teilnehmergerät 16 gelangen kann, ist die zweite Diode 14 vorgesehen, die den ersten Kondensator 14 gleichstrommäßig überbrückt.

Wenn kein Ruf vorliegt, ist der Rufwechselspannungsgenerator ausgeschaltet.

In der Fig. 2, in der eine weitere Schaltungsanordnung zur Erzeugung eines der Wechselspannung zu überlagernden Gleichspannungsanteils dargestellt ist, ist die Anode einer ersten Diode 18 und ein Anschluß des Teilnehmergerätes 16 an den Anschluß 12 des Umschalter 6 angeschlossen. Die Kathode der ersten Diode 18 ist mit der Kathode einer zweiten Diode 19, einem Anschluß eines ersten Kondesators 20 und mit dem anderen Anschluß des Teilnehmergerätes 16 verbunden. Die Anode der zweiten Diode 19 und der andere Anschluß des ersten Kondensators 20 ist an den Anschluß 11 des Umschaltes 6 gelegt. An die beiden Anschlüsse des ersten Kondensators 20 ist noch eine erste Auswerteschaltung 21 angeschaltet, die den Umschalter 6 steuert.

Bei einem Ruf ist der Rufwechselspannungsgenerator 1 über den Umschalter 6 mit dem Teilnehmergerät 16 gekoppelt. Wenn eine positive Halbwelle der Wechselspannung des Rufwechselgenerators 1 an der Anode der ersten Diode 18 anliegt, ist die Diode 13 in Durchlaßrichtung geschaltet. Der erste Kondensator 20 wird auf den positiven Spitzenwert der Wechselspannung aufgeladen. Liegt die negative Halbwelle der Wechselspannung des Rufwechselspannungsgenerators 1 an der Anode der ersten Diode 18, ist die Diode 18 gesperrt. Der Gleichspannungsanteil, der mit Hilfe des ersten Kondensators 20 erzeugt wird, wird der vom Rufwechselspannungsgenerator 1 gelieferten Wechselspannung überlagert und dem Teilnehmergerät 16 geliefert. Die erste Auswerteschaltung 21 detektiert ebenso wie die erste Auswerteschaltung 17 der Fig. 1 Ladungsänderungen und steuert in Abhängigkeit von der Ladungsänderung den Umschalter 6. Die zweite Diode 19 ist vorgesehen, um den ersten Kondensator 20 zu überbrücken. Bei Abnahme des Hörers von einem Teilnehmer liefert die Teilnehmerspeiseschaltung 9 einen Betriebsgleichstrom, der dem Teilnehmergerät 16 zugeführt wird. Dieser Gleichstrom kann über die zweite Diode 19 dem Teilnehmergerät 16 zugeführt werden.

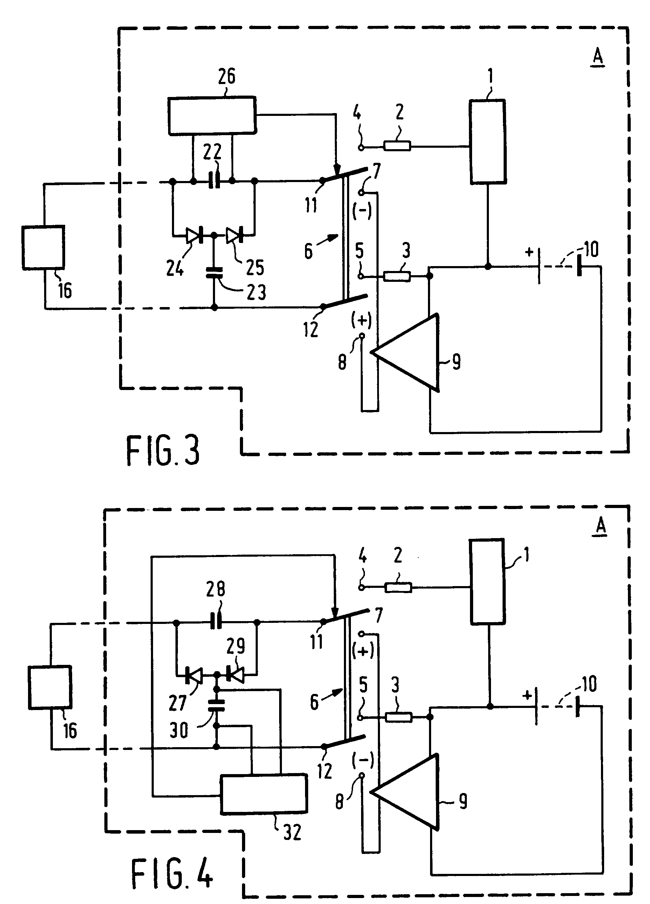

Mit der Schaltungsanordnung nach der Fig. 3 wird eine Gleichspannung erzeugt, die der vom Rufwechselspannungsgenerator 1 gelieferten Wechselspannung überlagert wird und die dem zweifachen negativen Spitzenwert der Wechselspannug entspricht. Hierzu ist ein erster Kondensator 22, ein zweiter Kondensator 23, eine erste Diode 24 und eine zweite Diode 25 vorgesehen. Ein Anschluß des ersten Kondensators 22 ist mit dem Anschluß 11 des Umschalters 6 und der Kathode der zweiten Diode 25 verbunden. Der andere Anschluß des ersten Kondensators 22 ist an einen Anschluß des Teilnehmergerätes 16 und an die Anode der ersten Diode 24 angeschlossen. Ein Anschluß des zweiten Kondensators 23, die Kathode der ersten Diode 24 und die Anode der zweiten Diode 25 bilden einen gemeinsamen Knoten. An den Anschluß 12 des Umschalters 6 ist noch der andere Anschluß des zweiten Kondensators 23 und der andere Anschluß des Teilnehmergerätes 16 gelegt.

Bei Anliegen einer negativen Halbwelle der Wechselspannung ist die zweite Diode 25 leitend, und der zweite Kondensator 23 wird auf den negativen Spitzenwert der Wechselspannung des Rufwechselspannungsgenerators 1 aufgeladen. Während des Anliegens der positiven Halbwelle ist die erste Diode 24 leitend und der erste Kondensator 22 wird auf den zweifachen negativen Spitzenwert der Wechselspannung aufgeladen. Die mit Hilfe des Kondensators 22 erzeugte Gleichspannung wird der Wechselspannung überlagert.

Zur Detektion einer Ladungsänderung ist noch an den beiden Anschlüssen des ersten Kondensators 22 eine erste Auswerteschaltung 26 angeschlossen, die in Abhängigkeit von der Spannung am Kondensator 22 den Umschalter 6 steuert. Mittels der beiden Dioden 24 und 25 wird der erste Kondensator 22 gleichstrommäßig überbrückt, so daß eine Betriebsgleichspannung dem Teilnehmergerät 16 von der Teilnehmerspeiseschaltung geliefert werden kann.

Mit Hilfe der Schaltungsanordnung nach Fig. 4 kann eine positive Gleichspannung erzeugt werden, deren Betrag gleich dem zweifachen Spitzenwert der Wechselspannung entspricht. Hierzu ist eine erste Diode 27 vorgesehen, deren Kathode mit einem Anschluß des Teilnehmergerätes 16 und mit einem Anschluß eines ersten Kondensators 28 verbunden ist. An die Anode der ersten Diode 27 ist die Kathode einer zweiten Diode 29 und ein Anschluß eines zweiten Kondensators 30 angeschlossen. Die Anode der zweiten Diode 29 und der andere Anschluß des ersten Kondensators 28 sind an den Anschluß 11 des Umschalters 6 gelegt. Der andere Anschluß des Teilnehmergerätes 16, der andere Anschluß des zweiten Kondensators 30 und der Anschluß 12 des Umschalter 6 bilden einen gemeinsamen Knoten. Wenn der Rufwechselspannungsgenerator 1 über den Umschalter 6 mit dem Teilnehmergerät 16 gekoppelt ist, wird der Kondensator 28 auf den zweifachen positiven Spitzenwert der Wechselspannung aufgeladen. Wenn die Teilnehmerspeiseschaltung 9 mit dem Teilnehmergerät 16 gekoppelt ist, wird der erste Kondensator 28 gleichstrommäßig durch die beiden Dioden 27 und 29 überbrückt.

Zur Steuerung des Umschalters ist eine zweite Auswerteschaltung vorgesehen, die mit den beiden Anschlüssen des zweiten Kondensators 30 verbunden ist. Wenn die Auswerteschaltung 32 eine Ladungsänderung an dem Kondensator 30 festgestellt, wird der Umschalter 6 betätigt.

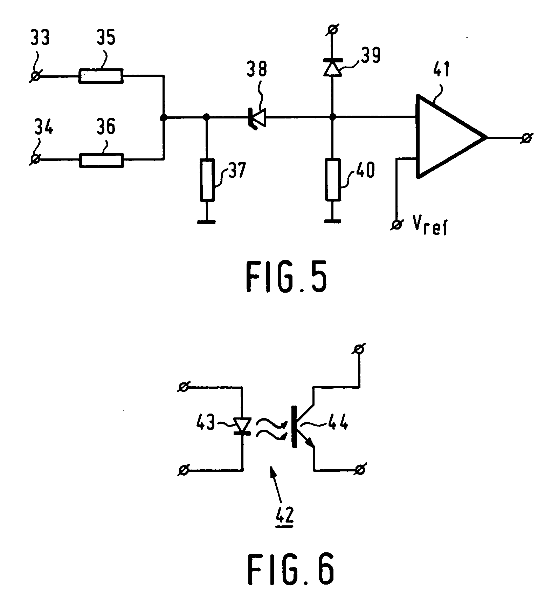

Ein Ausführungsbeispiel für eine Auswerteschaltung 17, 21, 26 oder 32 ist in Fig. 5 dargestellt. Die beiden Eingänge 33 und 34 der Auswerteschaltung nach Fig. 5 sind an die beiden Anschlüsse der Kondensatoren 15, 20, 22 oder 30 angeschlossen. Der Anschluß 33 ist mit einem Widerstand 35 und der Anschluß 34 mit einem Widerstand 36 verbunden. Die anderen Anschlüsse der beiden Widerstände 35 und 36 sind mit einem weiteren Widerstand 37, der an Masse gelegt ist, und mit einer Kathode einer Zenerdiode 38 verbunden. Die Anode der Zenerdiode 38 ist mit einer Anode einer weiteren Diode 39 und mit einem Widerstand 40, der andererseits an Masse gelegt ist, verbunden. Die Kathode der Diode 39 ist an eine Spannungsversorgung gelegt. Des weiteren ist die Anode der Zenerdiode 38 mit einem ersten Eingang eines Komparators 41 verbunden, dessen anderer Eingang eine Referenzspannung Uref erhält. Der Ausgang des Komparators 41 liefert ein Umschaltsignal für den Umschalter 6. Die Zenerdiode 38 dient dazu, daß bei einer bestimmten Schwelle, die der Zenerspannung entspricht, dem Komparator 41 plötzlich eine geänderte Spannung zugeführt wird. Bei einer Ladungsänderung an einem Kondensator, deren Spannung kleiner ist als die Zenerspannung, erzeugt der Komparator 41 an seinem Ausgang ein Umschaltsignal, das dem Umschalter 6 zugeführt wird.

Eine Auswerteschaltung, die den Strom durch einen Kondensator 15, 20, 22 oder 30 oder durch die ersten Dioden 13 und 14 feststellt, ist in Fig. 6 gezeigt. Diese Auswerteschaltung enthält einen Optokoppler 42, über dessen Leuchtdiode der Strom der Kondensatoren 15, 20, 22 oder 30 oder der Strom über die ersten Dioden 13 oder 18 geführt wird. Das von der Leuchtdiode 43 ausgesendete Licht wird von dem Fototransistor 44 des Optokopplers 42 empfangen. Der Kollektor dieses Fototransistors 44 ist mit einer Versorgungsspannung verbunden und dessen Emitter liefert das Umschaltsignal für den Umschalter 6. Bei einer Ladungsänderung wird folglich ein Umschaltsignal von dem Optokoppler 42 erzeugt.

## Patentansprüche

1. Telekommunikationssystem mit einer Schaltungsanordnung für wenigstens ein Teilnehmergerät (16), welche über einen Umschalter (6) an einen Rufwechselspannungsgenerator (1) oder eine Teilnehmerspeiseschaltung (9) anschließbar ist,
dadurch gekennzeichnet,
daß zwischen Teilnehmergerät (16) und Umschalter (6) ein erster Kondensator (15, 20) angeordnet ist, daß parallel zum ersten Kondensator und dem Umschalter ein Zweig mit einer ersten Gleichrichteranordnung (13, 18) zum Durchlassen einer Halbwelle des vom Rufwechselspannungsgenerator (1) lieferbaren Wechselstromes enthalten ist, daß parallel zum ersten Kondensator eine zweite Gleichrichteranordnung (14, 19) angeordnet ist zum Durchlassen eines von der Teilnehmerspeiseschaltung (9) lieferbaren Gleichstromes und daß eine erste Auswerteschaltung (17,21) zum Steuern des Umschalters durch Auswertung eines Stromes am ersten Kondensator oder an der ersten Gleichrichteranordnung oder der Spannung am ersten Kondensator vorgesehen ist.

2. Telekommunikationssystem mit einer Schaltungsanordnung für wenigstens ein Teilnehmergerät (16), welche über einen Umschalter (6) an einen Rufwechselspannungsgenerator (1) oder eine Teilnehmerspeiseschaltung (9) anschließbar ist,
dadurch gekennzeichnet,
daß zwischen Teilnehmergerät (16) und einem Anscjluß (11) des Umschalters (6) ein erster Kondensator (22, 28 angeordnet ist, daß zwei in Reihe geschaltete Gleichrichteranordnungen (24, 25; 27, 29) parallel zum ersten Kondensator gelegt sind, daß zwischen dem anderen Anschluß (12) des Umschalters und der Verbindung zwischen den beiden Gleichrichteranordnungen ein zweiter Kondensator (23, 30) angeordnet ist, daß eine Gleichrichteranordnung angeordnet ist, zum Durchlassen einer Halbwelle des von dem Rufwechselspannungsgenerator (1) lieferbaren Wechselstromes, daß die andere Gleichrichteranordnung angeordnet ist zum Durchlassen der anderen Halbwelle, daß beide Gleichrichteranordnungen angeordnet sind zum Durchlassen des von der Teilnehmerspeiseschaltung lieferbaren Gleichstromes und daß eine erste Auswerteschaltung (26) zum Steuern des Umschalters (6) durch Auswertung des Stromes oder der Spannung am ersten Kondensator oder eine zweite Auswerteschaltung (32) zum Steuern des Umschalters (6) durch Auswertung der Spannung am zweiten Kondensator vorgesehen ist.

3. Telekommunikationssystem mit einer Schaltungsanordnung nach Anspruch 1,
dadurch gekennzeichnet,
daß die erste Gleichrichteranordnung eine erste (13) und die zweite Gleichrichteranordnung eine zweite Diode (14) enthalten, daß die Kathode der zweiten Diode (14) und ein Anschluß des ersten Kondensators (15) mit einem Anschluß (11) des Umschalters (6) gekoppelt sind und daß der andere Anschluß des Kondensators und die Anoden der beiden Dioden (13, 14) gekoppelt sind.

4. Telekommunikationssystem mit einer Schaltungsanordnung nach Anspruch 1,
dadurch gekennzeichnet,
daß die erste Gleichrichteranordnung eine erste (18) und die zweite Gleichrichteranordnung eine zweite Diode (19) enthalten, daß die Anode der zweiten Diode (19) und ein Anschluß des ersten Kondensators (20) mit einem Anschluß (11) des Umschalters (6) gekoppelt sind und daß der andere Anschluß des Kondensators und die Kathoden der beiden Dioden (18, 19) gekoppelt sind.

5. Telekommunikationssystem mit einer Schaltungsanordnung nach Anspruch 2,
dadurch gekennzeichnet,
daß die eine eichrichteranordnung eine erste (24) und die andere Gleichrichteranordnung eine zweite Diode (25) enthalten, daß die Kathode der zweiten Diode (25) und ein Anschluß des ersten Kondensators (22) mit einem Anschluß (11) des Umschalters (6) gekoppelt sind, daß die Anode der ersten Diode (24) mit dem anderen Anschluß des ersten Kondensators gekoppelt ist und daß die Kathode der ersten Diode und die Anode der zweiten Diode mit einem zweiten Kondensator (23) gekoppelt sind, dessen anderer Anschluß an einen Anschluß des Teilnehmergerätes (16) und den anderen Anschluß (12) des Umschalters gekoppelt ist.

6. Telekommunikationssystem mit einer Schaltungsanordnung nach Anspuch 2,
dadurch gekennzeichnet,
daß die eine Gleichrichteranordnung eine erste (27) und die andere Gleichrichteranordnung eine zweite Diode (29) enthalten, daß die Anode der zweiten Diode (29) und ein Anschluß des ersten Kondensators (28) mit einem Anschluß (11) des Umschalters (6) gekoppelt sind, daß die Kathode der ersten Diode (27) mit dem anderen Anschluß des ersten Kondensators gekoppelt ist und daß die Anode der ersten Diode und die Kathode der zweiten Diode mit einem zweiten Kondensator (30) gekoppelt sind, dessen anderer Anschluß mit einem Anschluß des Teilnehmergerätes (16) und dem anderen Anschluß (12) des Umschalters gekoppelt ist.

7. Telekommunikationssystem mit einer Schaltungsanordnung nach einem der Ansprüche 1 bis 6,
dadurch gekennzeichnet,
daß die erste oder zweite Auswerteschaltung (17, 21, 26, 32) einen Komparator (41) enthält, der einerseits zum Empfangen der Spannung am ersten oder zweiten Kondensator (15, 20, 22, 28; 23, 30) und zum Empfangen einer Referenzspannung und andererseits zum Steuern des Umschalters (6) mittels seines Ausgangssignales vorgesehen ist.

8. Telekommunikationssystem mit einer Schaltungsanordnung nach einem der Ansprüche 1 bis 6,
dadurch gekennzeichnet,
daß die erste Auswerteschaltung einen Optokoppler (42) enthält mit einer Leuchtdiode (43) zum Empfangen des Stroms durch den ersten Kondensator (15, 20, 22, 30) oder des Stroms durch die erste Gleichrichteranordnung (13, 18) und mit einem Fototransistor (44) zum Steuern des Umschalters (6).

## Claims

1. Telecommunications system comprising a circuit arrangement for at least one subscriber station (16), which arrangement can be connected via a reversing switch (6) either to an AC signalling voltage generator (1) or a line voltage supply circuit (9) for a subscriber station, characterized in that a first capacitor (15, 20) is inserted between the subscriber station (16) and the reversing switch (6), in that a branch comprising a first rectifier arrangement (13, 18) for passing a half wave of the AC current that can be produced by the AC signalling voltage generator (1) is connected parallel with the first capacitor and the reversing switch, in that parallel with the first rectifier is connected a second rectifier arrangement (14, 19) for passing a DC current that can be produced by the subscriber station line voltage supply circuit (9) and in that a first detection circuit (17, 21) controls the reversing switch by detecting the current at the first capacitor or at the first rectifier arrangement or the voltage at the first capacitor.

2. Telecommunications system comprising a circuit arrangement for at least one subscriber station (16), which arrangement may be connected by means of a reversing switch (6) to an AC signalling voltage generator (1) or a subscriber station line voltage supply circuit (9), characterized in that a first capacitor (22, 28) is inserted between the subscriber station (16) and a terminal (11) of the reversing switch (6), in that a series connection of two rectifier arrangements (24, 25; 27, 29) is connected parallel with the first capacitor, in that a second capacitor (23, 30) is inserted between the other terminal (12) of the reversing switch and the line between the two rectifier arrangements, in that one of the rectifier arrangements passes a half wave of the AC current that can be produced by the AC signalling voltage generator (1), in that the second rectifier arrangement passes the other half wave, in that the two rectifier arrangements pass the DC current that can be produced by the subscriber station line voltage supply circuit, and in that a first detection circuit (26) controls the reversing switch (6) by detection of the current or the voltage at the first capacitor, or in that a second detection circuit (32) controls the reversing switch (6) by detection of the voltage at the second capacitor.

3. Telecommunications system comprising a circuit arrangement as claimed in Claim 1, characterized in that the first rectifier arrangement comprises a first diode (13) and the second rectifier arrangement comprises a second diode (14), in that the cathode of the second diode (14) and a lead of the first capacitor (15) are coupled to a terminal (11) of the reversing switch (6), and in that the other lead of the capacitor and the anodes of the two diodes (13, 14) are coupled.

4. Telecommunications system comprising a circuit arrangement as claimed in Claim 1, characterized in that the first rectifier arrangement comprises a first diode (18) and the second rectifier arrangement comprises a second diode (19), in that the anode of the second diode (19) and a lead of the first capacitor (20) are coupled to a terminal (11) of the reversing switch (6), and in that the other lead of the capacitor and the cathodes of the two diodes (18, 19) are coupled.

5. Telecommunications system comprising a circuit arrangement as claimed in Claim 2, characterized in that the first rectifier arrangement comprises a first diode (24) and the second rectifier arrangement comprises a second diode (25), in that the cathode of the second diode (25) and a lead of the first capacitor (22) are coupled to a terminal (11) of the reversing switch (6), in that the anode of the first diode (24) is coupled to the other lead of the first capacitor, and in that the cathode of the first diode and the anode of the second diode are coupled to the second capacitor (23) whose other lead is coupled to a line of the subscriber station (16) and to the other terminal (12) of the reversing switch.

6. Telecommunications system comprising a circuit arrangement as claimed in Claim 2, characterized in that the first rectifier arrangement comprises a first diode (24) and the second rectifier arrangement comprises a second diode (25), in that the anode of the second diode (29) and a lead of the first capacitor (28) are coupled to a terminal (11) of the reversing switch (6), in that the cathode of the first diode (27) is coupled to the other lead of the first capacitor and in that the anode of the first diode and the cathode of the second diode are coupled to a second capacitor (30) whose other lead is coupled to a line of the subscriber station (16) and the other terminal (12) of the reversing switch.

7. Telecommunications system comprising a circuit arrangement as claimed in one of the Claims 1 to 6, characterized in that the first or second detection circuit (17, 21, 26, 32) comprises a comparator (41) for receiving, on the one hand, the voltage at the first or second capacitor (15, 20, 22, 28; 23, 30) and, on the other hand, for receiving a reference voltage and for controlling the reversing switch (6) by means of its output signal.

8. Telecommunications system comprising a circuit arrangement as claimed in one of the Claims 1 to 6, characterized in that the first detection circuit comprises an optocoupler (42) with a light-emitting diode (43) for receiving the current through the first capacitor (15, 20, 22, 30) or the current through the first rectifier arrangement (13, 18),22 and comprises a phototransistor (44) for controlling the reversing switch (6).

## Revendications

1. Système de télécommunications comportant un montage de circuit pour au moins un appareil téléphonique (16), qui peut être connecté à un générateur de tension alternative de sonnerie (1) ou à un circuit d'alimentation (9) via un commutateur (6), caractérisé en ce qu'entre l'appareil téléphonique (16) et le commutateur (6) est monté un premier condensateur (15, 20), en ce que, en parallèle avec le premier condensateur et le commutateur, est disposée une dérivation avec un premier dispositif redresseur (13, 18) pour laisser passer une demi-onde du courant alternatif délivré par le générateur de tension alternative de sonnerie (1), en ce que, en parallèle avec le premier condensateur est monté, un deuxième dispositif redresseur (14, 19) pour laisser passer un courant continu délivré par le circuit d'alimentation (9) et en ce qu'un premier circuit d'évaluation (17, 21) est prévu pour commander le commutateur par évaluation du courant dans le premier condensateur ou dans le premier dispositif redresseur, ou de la tension dans le premier condensateur.

2. Système de télécommunications comportant un montage de circuit pour au moins un appareil téléphonique (16), qui peut être connecté à un générateur de tension alternative de sonnerie (1) ou à un circuit d'alimentation (9) via un commutateur (6), caractérisé en ce que, entre l'appareil téléphonique (16) et une borne (11) du commutateur (6), est monté un premier condensateur (22, 28), en ce que deux dispositifs redresseurs (24, 25; 27, 29), connectés en série, sont montés en parallèle avec le premier condensateur, en ce que, entre l'autre borne (12) du commutateur et la liaison entre les deux dispositifs redresseurs est disposé, un deuxième condensateur (23, 30), en ce qu'un dispositif redresseur est prévu pour laisser passer une demi-onde du courant alternatif délivré par le générateur de tension alternative de sonnerie (1), en ce que l'autre dispositif redresseur est prévu pour laisser passer l'autre demi-onde, en ce que les deux dispositifs redresseurs sont prévus pour laisser passer le courant continu délivré par le circuit d'alimentation et en ce qu'un premier circuit d'évaluation (26) est prévu pour commander le commutateur (6) par évaluation du courant ou de la tension sur le premier condensateur ou un deuxième circuit d'évaluation (32) est prévu pour commander le commutateur (6) par évaluation de la tension sur le deuxième condensateur.

3. Système de télécommunications comportant un montage de circuit selon la revendication 1, caractérisé en ce que le premier dispositif redresseur contient une première diode (13) et le deuxième dispositif redresseur une deuxième diode (14), en ce que la cathode de la deuxième diode (14) et une borne du premier condensateur (15) sont couplées à une borne (11) du commutateur (6) et en ce que l'autre borne du condensateur et les anodes des deux diodes (13, 14) sont couplées.

4. Système de télécommunications comportant un montage de circuit selon la revendication 1, caractérisé en ce que le premier dispositif redresseur contient une première diode (18) et le deuxième dispositif redresseur une deuxième diode (19), en ce que l'anode de la deuxième diode (19) et une borne du premier condensateur (20) sont couplées à une borne (11) du commutateur (6) et en ce que l'autre borne du condensateur et les cathodes des deux diodes (18, 19) sont couplées.

5. Système de télécommunications comportant un montage de circuit selon la revendication 2, caractérisé en ce que le dispositif redresseur contient une première diode (24) et l'autre dispositif redresseur une deuxième diode (25), en ce que la cathode de la deuxième diode (25) et une borne du premier condensateur (22) sont couplées à une borne (11) du commutateur (6), en ce que l'anode de la première diode (24) est couplée à l'autre borne du premier condensateur et en ce que la cathode de la première diode et l'anode de la deuxième diode soient couplées à un deuxième condensateur (23), dont l'autre borne est couplée à une borne de l'appareil téléphonique (16) et à l'autre borne (12) du commutateur.

6. Système de télécommunications comportant un montage de circuit selon la revendication 2, caractérisé en ce qu'un dispositif redresseur contient une première diode (27) et l'autre dispositif redresseur une deuxième diode (29), en ce que l'anode de la deuxième diode (29) et une borne (11) du premier condensateur (28) sont couplées à une borne (11) du commutateur (6), en ce que la cathode de la première diode (27) est couplée à l'autre borne du premier condensateur et en ce que l'anode de la première diode et la cathode de la deuxième diode sont couplées à un deuxième condensateur (30), dont l'autre borne est couplée à une borne de l'appareil téléphonique (16) et à l'autre borne (12) du commutateur.

7. Système de télécommunications avec un montage de circuit selon l'une quelconque des revendications 1 à 6, caractérisé en ce que le premier ou le deuxième circuit d'évaluation (17, 21, 26, 32) contient un comparateur (41), qui est destiné, d'une part, à recevoir la tension appliquée sur le premier ou le deuxième condensateur (15, 20, 22, 28; 23, 30) et, d'autre part, à recevoir une tension de référence, et, à commander le commutateur (6) à l'aide de son signal de sortie.

8. Système de télécommunications comportant un montage de circuit selon l'une quelconque des revendications 1 à 6, caractérisé en ce que le premier circuit d'évaluation contient un optocoupleur (42) avec une diode luminescente (43) pour recevoir le courant passant par le premier condensateur (15, 20, 22, 30) ou le courant passant par le premier dispositif redresseur (13, 18), et avec un phototransistor (44) pour commander le commutateur (6).
